# FASCICULE DE BREVET EUROPEEN

(11) **EP 2 911 932 B1**
(45) Date de publication et mention de la délivrance du brevet: **13.07.2016**
(21) Numéro de dépôt: 13792053.4
(22) Date de dépôt: 21.10.2013
(51) Int. Cl.: B62D 25/08

(54) **PROCÉDÉ DE FABRICATION D'UN PLANCHER ARRIÈRE DE VÉHICULE AUTOMOBILE ET PLANCHER ARRIÈRE RÉALISÉ PAR UN TEL PROCÉDÉ**
VERFAHREN ZUM HERSTELLEN EINEN HINTEREN BODEN EINES KRAFTFAHRZEUGES UND BODEN HERGESTELLT MIT EINEM SOLCHEN VERFAHREN.
METHOD OF MANUFACTURING A MOTOR VEHICLE REAR FLOOR AND REAR FLOOR PRODUCED USING SUCH A METHOD

(30) Priorité: 29.10.2012 FR 1260299
(43) Date de publication de la demande: 02.09.2015
(73) Titulaire: Renault S.A.S., 92100 Boulogne-Billancourt (FR)
(72) Inventeur: VERO, Emmanuel, F-78340 Les Clayes-Sous-Bois (FR); VIVERO, Francois, F-78860 Saint Nom La Brétèche (FR); DJEKOUANE, Karim, F-78630 Orgeval (FR)
(86) Numéro de dépôt international: PCT/FR2013/052501
(87) Numéro de publication internationale: WO 2014/068215

(56) Documents cités:
- EP-A1- 1 911 662
- EP-A1- 2 441 653
- EP-A2- 1 612 127
- DE-A1-102008 055 738

## Description

### Domaine technique de l'invention

L'invention concerne un procédé de fabrication d'un plancher arrière d'un véhicule automobile tel que décrit dans le document EP 1 911 662 A1 qui divulgue le preambule de la revendication 1 de la présente demande.

L'invention concerne plus particulièrement un procédé de fabrication d'un plancher arrière d'un véhicule automobile, réalisé à partir d'un flanc de tôle aux dimensions prédéterminées selon la version du plancher arrière considérée, le procédé comportant différentes opérations successives, chaque opération étant associée à au moins un outil déterminé.

L'invention concerne également un plancher arrière obtenu par un tel procédé de fabrication.

### Etat de la technique

Les véhicules automobiles d'un même modèle sont généralement déclinés en plusieurs versions ou gammes, à savoir le véhicule « classique » de type berline quatre ou cinq portes, mais aussi le véhicule de type « break », le véhicule du type « coupé sportif », la version « sport », etc. Pour la conception et la réalisation de ces différentes versions ou configurations du véhicule, le constructeur automobile modifie la structure externe du véhicule, mais en utilisant le plus possible de composants communs à toutes les versions, dans un objectif de réduction des coûts de fabrication.

Plus particulièrement, le plancher arrière d'un véhicule automobile est un composant essentiel de la structure de la base roulante du véhicule, lequel plancher arrière peut intégrer un bac de roue de secours. Il fait donc partie des éléments pouvant rester communs aux différentes versions d'un même véhicule, pour optimiser la réduction des coûts. Toutefois, il existe des variations de longueur très importantes entre les différentes versions des véhicules chez de nombreux constructeurs. Actuellement, pour chaque version d'un véhicule automobile, il est nécessaire de prévoir un procédé de fabrication spécifique à chaque version du plancher, afin de prendre en compte toutes les spécificités inhérentes à chaque version et à chaque type de véhicule à réaliser.

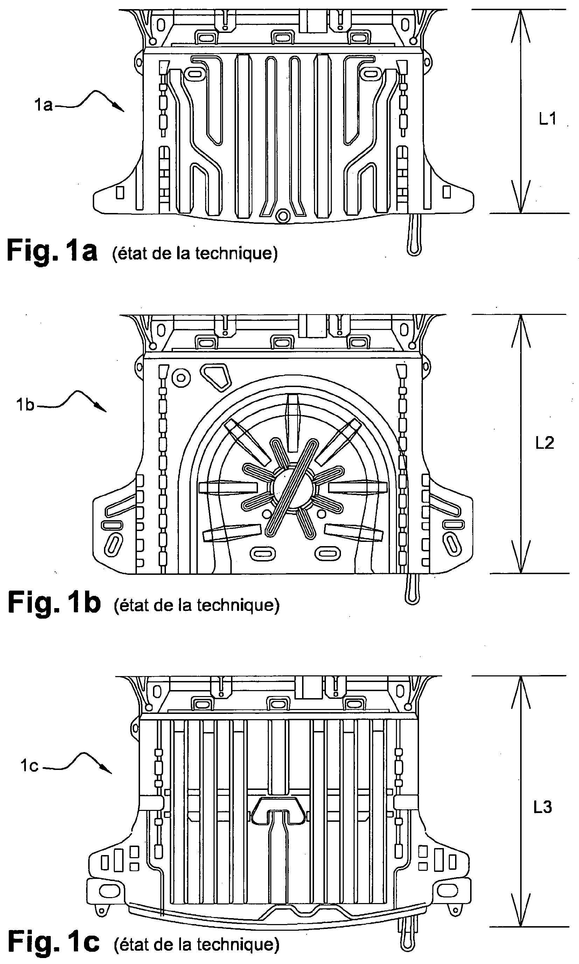

A titre d'exemple, comme représenté sur les figures 1a à 1c, une même gamme d'un véhicule automobile peut comprendre une première version 1a d'un plancher arrière, correspondant notamment à un plancher d'une première configuration de véhicule, par exemple de type berline cinq portes (figure 1a), une seconde version 1 b d'un plancher arrière, correspondant notamment à un plancher d'une seconde configuration de véhicule, par exemple de type berline quatre portes (figure 1 b), et une troisième version 1 c d'un plancher arrière, correspondant notamment à un plancher d'une troisième configuration de véhicule, par exemple de type monospace (figure 1 c). Les trois versions 1a, 1b et 1c des planchers présentent notamment trois longueurs différentes, la longueur L1 de la version 1 a étant notamment inférieure à la longueur L2 et la longueur L3 des deux autres versions, les longueurs L2 et L3 pouvant être, par exemple, identiques.

Ces différences imposent aux constructeurs automobiles de réaliser des planchers arrière différents pour les différents types de véhicules. Ces planchers étant généralement réalisés en tôle d'acier emboutie, il est nécessaire de prévoir différentes matrices d'emboutissage pour la réalisation des différents planchers. Cela demande ainsi l'utilisation de nombreuses machines d'emboutissage et de nombreux outillages, ce qui représente un très lourd investissement. Les coûts de fabrication et de manutention en résultant s'avèrent également très élevés.

### Objet de l'invention

L'invention a pour but de remédier à l'ensemble des inconvénients précités et a pour objet un procédé de fabrication d'un plancher arrière d'un véhicule automobile qui permettent la réalisation de différentes configurations de véhicules automobile, tout en était économique, simple à mettre en oeuvre et en réduisant les coûts d'utilisation et d'entretien au maximum.

L'objet de l'invention est caractérisé, plus particulièrement, par le fait que, étant destiné à la réalisation de plusieurs versions de planchers arrière correspondant chacune à une configuration différente de véhicule automobile, le procédé comporte au moins une opération identique, quelle que soit la version du plancher à réaliser, laquelle opération étant réalisée à l'aide d'au moins un outil commun pour toutes les versions de planchers arrière.

Un tel procédé a ainsi pour avantage principal de pouvoir utiliser au moins un même outil pour la réalisation de différents types de planchers arrière.

D'autres avantages et caractéristiques de l'invention peuvent être considérés isolément ou en combinaison :
- Etant destiné à la réalisation de trois configurations différentes de véhicule automobile, le procédé peut comporter deux opérations communes pour les trois versions de planchers arrière.
- Le procédé peut comporter une opération commune pour deux versions de planchers arrière.
- Etant destiné à la réalisation de trois configurations différentes de véhicule automobile, le procédé peut comporter au moins les étapes successives suivantes :
   - découpage d'un flan de tôle aux dimensions correspondant à la version du plancher arrière à réaliser,
   - première opération commune aux trois configurations, réalisée avec au moins un premier outil, identique quelle que soit la version du plancher à réaliser,
   - seconde opération commune aux trois configurations, réalisée avec au moins un second outil, identique quelle que soit la version du plancher à réaliser.
- Le procédé peut comporter une troisième opération, uniquement pour une première version d'un plancher arrière, correspondant à une première configuration de véhicule automobile, réalisée à l'aide d'au moins un troisième outil spécifique à la fabrication de la première version du plancher arrière.
- Le procédé peut comporter une troisième opération, uniquement pour une seconde version d'un plancher arrière, correspondant à une seconde configuration de véhicule automobile, réalisée à l'aide d'au moins un quatrième outil spécifique à la fabrication de la seconde version du plancher arrière.
- Le procédé peut comporter une quatrième opération, commune à la première et à la seconde configurations de véhicule automobile, réalisée à l'aide d'au moins un cinquième outil, identique pour la fabrication des deux versions de planchers arrière correspondant.
- Le procédé peut comporter une cinquième opération, uniquement pour une troisième version d'un plancher arrière, correspondant à une troisième configuration de véhicule automobile, réalisée à l'aide d'au moins un sixième outil spécifique à la fabrication de la troisième version du plancher arrière.

L'invention a également pour objet la réalisation d'un plancher arrière d'un véhicule automobile qui puisse être reproduit au plus simple et au plus rapide, avec le maximum de parties communes, pour différentes configurations de véhicules automobile.

Cet objet de l'invention est caractérisé plus particulièrement en ce qu'il comporte au moins une portion identique pour toutes les configurations de véhicules automobiles et au moins une portion spécifique, correspondant à chaque configuration de véhicule automobile.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 a à 1 c représentent chacune un exemple particulier de plancher arrière d'un véhicule automobile, réalisé par un procédé de fabrication selon l'art antérieur.
Les figures 2a à 2c représentent chacune un exemple particulier d'un plancher arrière d'un véhicule automobile, réalisé par un procédé de fabrication selon l'invention.
La figure 3 illustre schématiquement une vue partielle en perspective de l'arrière de la structure d'un véhicule automobile, sur laquelle les trois planchers selon les figures 2a à 2c sont représentés en superposition.
Les figures 4a à 4c représentent chacune schématiquement un plancher arrière selon l'invention, avec des zones spécifiques et des zones communes, réalisé par un procédé de fabrication d'un plancher arrière selon l'invention.
Les figures 5a à 5e représentent les différentes étapes successives d'un premier mode de réalisation d'un procédé de fabrication selon l'invention, d'une première version d'un plancher arrière correspondant à une première configuration d'un véhicule automobile.
Les figures 6a à 6e représentent les différentes étapes successives d'un second mode de réalisation d'un procédé de fabrication selon l'invention, d'une seconde version d'un plancher arrière correspondant à une seconde configuration d'un véhicule automobile.
Les figures 7a à 7d représentent les différentes étapes successives d'un troisième mode de réalisation d'un procédé de fabrication selon l'invention, d'une troisième version d'un plancher arrière correspondant à une troisième configuration d'un véhicule automobile.

### Description de modes particuliers de réalisation

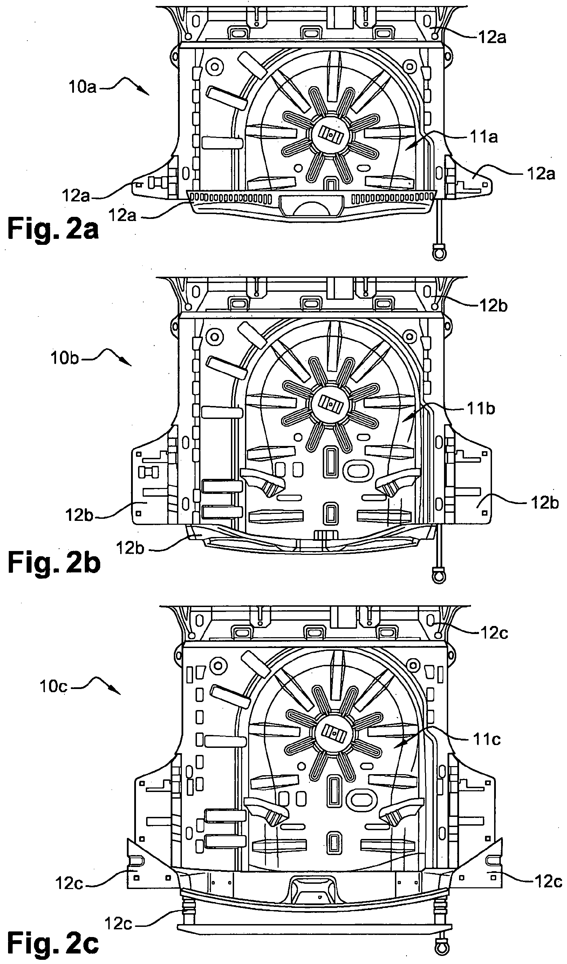

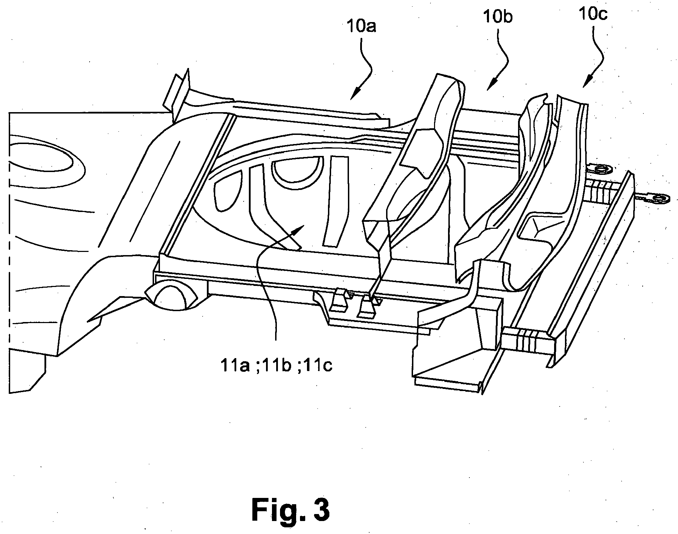

En référence aux figures 2a à 7d, le procédé de fabrication selon l'invention est destiné à la réalisation d'un plancher arrière pour plusieurs configurations différentes d'un véhicule automobile (figure 3), un plancher arrière correspondant à une configuration, avec au moins une opération, ou étape, commune pour toutes les versions du véhicule, de sorte notamment à économiser des outils de presses. Plus particulièrement, le procédé de fabrication selon l'invention permet à partir d'un flanc de tôle aux dimensions prédéterminées de pouvoir choisir entre plusieurs configurations différentes d'un véhicule automobile et de pouvoir réaliser plusieurs planchers différents avec un maximum d'outils identiques et des opérations d'emboutissage communes à toutes les versions différentes.

Comme représenté plus particulièrement sur les figures 2a à 2c et sur la figure 3, le procédé de fabrication selon l'invention est destiné à la réalisation d'un premier plancher 10a, destiné à une première configuration d'un véhicule automobile, par exemple du type berline cinq portes (figure 2a), d'un second plancher 10b, destiné à une seconde configuration d'un véhicule automobile, par exemple du type berline quatre portes (figure 2b), ou d'un troisième plancher 10c, destiné à une troisième configuration d'un véhicule automobile, par exemple du type break (figure 2c).

Les trois planchers 10a, 10b, 10c représentés en superposition sur la figure 3 comportent chacun une partie commune, respectivement 11 a, 11 b, 11c, c'est-à-dire identique quelle que soit la version du plancher 10a, 10b, 10c, et au moins une, plus particulièrement, plusieurs parties spécifiques, respectivement 12a, 12b, 12c, à chaque plancher 10a, 10b, 10c.

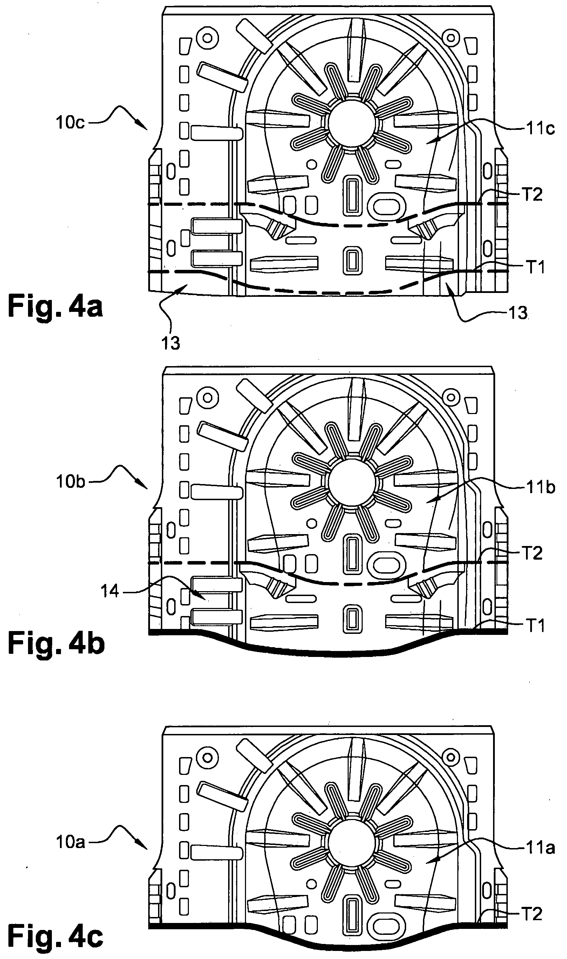

Plus particulièrement, comme représenté sur les figures 4a à 4c, le fait que les planchers 10a, 10b, 10c comportent au moins une partie commune 11 a, 11 b, 11 c permet de passer facilement de la réalisation d'un premier type de plancher 10c (figure 4a) à un second type de plancher 10b (figure 4b), par une simple opération supplémentaire. Comme représenté plus particulièrement sur la figure 4a, en partant du plancher 10c, une opération de détourage, ou de découpe, de la partie 13, délimitée par des premiers traits T1 en pointillés sur la figure 4a, permet de passer à la réalisation d'une seconde version de plancher, plus particulièrement du plancher 10b, comme représenté sur la figure 4b, où les traits en pointillés T1 (représentés maintenant en traits pleins sur la figure 4b) délimitent maintenant le bord du plancher 10b.

De même, en partant de ce plancher 10b (figure 4b), par une nouvelle opération de découpe d'une partie 14, au niveau de second traits en pointillés T2, permet ainsi de passer à la réalisation d'une troisième version de plancher, plus particulièrement du plancher 10a, comme représenté sur la figure 4c, où les traits en pointillés T2 (représentés maintenant en traits pleins sur la figure 4c) délimitent maintenant le bord du plancher 10a.

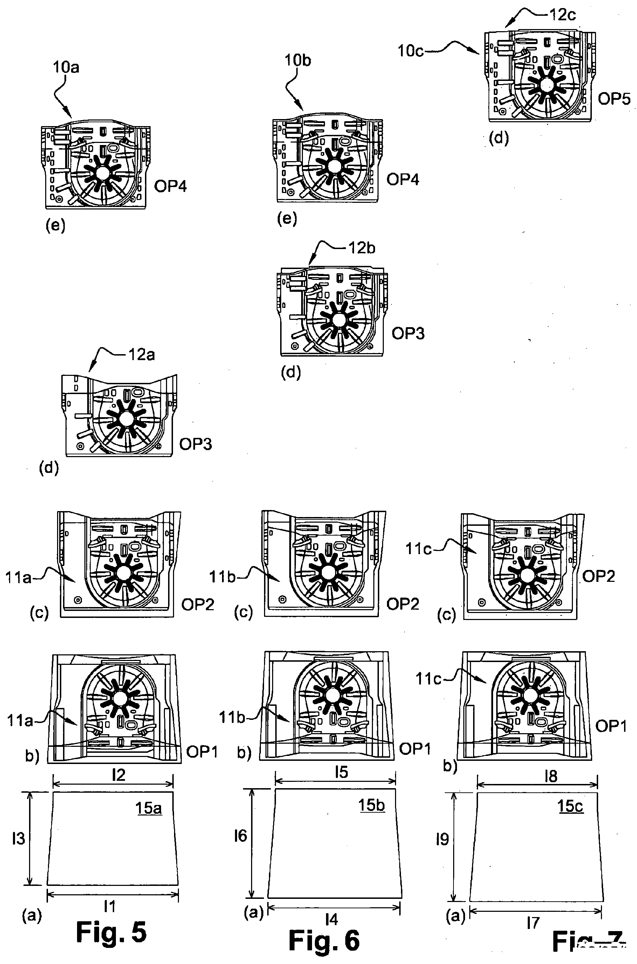

Des modes particuliers de réalisation du procédé de fabrication selon l'invention vont maintenant être décrits plus en détails en regard des figures 5a à 7d. Sur les figures 5a à 5e, les différentes étapes d'un premier mode de réalisation d'un procédé de fabrication du plancher 10a correspondant à une première configuration d'un véhicule sont représentées. Sur les figures 6a à 6e, les différentes étapes d'un second mode de réalisation d'un procédé de fabrication du plancher 10b correspondant à une seconde configuration d'un véhicule sont représentées. Sur les figures 7a à 7d, les différentes étapes d'un troisième mode de réalisation d'un procédé de fabrication du plancher 10c correspondant à une troisième configuration d'un véhicule sont représentées.

Pour des raisons de clarté et pour une meilleure illustration du principe de l'invention, à savoir des opérations identiques quelles que soit la version à fabriquer, les différents modes de réalisation du procédé de fabrication selon l'invention ont été représentés sur une même page. Il est clair que chaque mode de réalisation est destiné à être utilisé indépendamment des autres, c'est-à-dire soit le mode de réalisation selon les figures 5a à 5e, soit le mode de réalisation selon les figures 6a à 6e, soit le mode de réalisation selon les figures 7a à 7d. Aucun mode de réalisation ne peut être implémenté simultanément à un autre, le choix d'un mode de réalisation devant être fait en préalable au début du procédé de fabrication selon l'invention.

Sur les figures 5a, 6a et 7a, la première étape du procédé de fabrication selon l'invention comporte le découpage d'un flanc de tôle 15 aux dimensions prédéterminées selon le plancher 10 à réaliser, à savoir selon la configuration du véhicule recherchée. Sur la figure 5a, le flanc de tôle 15a est destiné à la réalisation du plancher 10a d'une première configuration d'un véhicule. A titre d'exemple, le flanc de tôle 15a est de forme sensiblement trapézoïdale, avec une première longueur I1 (grand côté) du trapèze de l'ordre de 1340mm, une seconde longueur 12 (petit côté) du trapèze de l'ordre de 1230mm et une largeur I3 du trapèze de l'ordre de 940mm. Sur la figure 5a, un tel flanc de tôle 15a avec de telles dimensions est notamment destiné à la réalisation d'un plancher 10a pour un véhicule de type berline classique.

Sur la figure 6a, le flanc de tôle 15b est destiné à la réalisation du plancher 10b d'une seconde configuration d'un véhicule. A titre d'exemple, le flanc de tôle 15b est de forme sensiblement trapézoïdale, avec une première longueur I4 (grand côté) du trapèze de l'ordre de 1360mm, une seconde longueur I5 (petit côté) du trapèze de l'ordre de 1230mm et une largeur I6 du trapèze de l'ordre de 1110mm. Sur la figure 6a, un tel flanc de tôle 15b avec de telles dimensions est notamment destiné à la réalisation d'un plancher 10b pour un véhicule de type berline « tricorps » quatre portes, c'est-à-dire dont les dimensions du coffre sont légèrement plus grande que pour le véhicule précédent considéré.

Sur la figure 7a, le flanc de tôle 15c est destiné à la réalisation du plancher 10c d'une troisième configuration d'un véhicule. A titre d'exemple, le flanc de tôle 15c est de forme sensiblement trapézoïdale, avec une première longueur I7 (grand côté) du trapèze de l'ordre de 1360mm, une seconde longueur I8 (petit côté) du trapèze de l'ordre de 1230mm et une largeur I9 du trapèze de l'ordre de 1110mm. Sur la figure 7a, un tel flanc de tôle 15c avec de telles dimensions est notamment destiné à la réalisation d'un plancher 10c pour un véhicule de type break, c'est-à-dire dont les dimensions du coffre sont sensiblement identiques aux dimensions du plancher du véhicule précédent.

Sur les figures 5b, 6b et 7b, le procédé de fabrication selon l'invention comporte ensuite une première opération OP1 d'emboutissage, laquelle est identique quelle que soit la version du plancher considérée et la configuration du véhicule correspondante, c'est-à-dire réalisée avec au moins un même outil commun aux trois versions, quel que soit le flanc de tôle de départ (figures 5a, 6a, 7a), et quelle que soit la version du plancher destinée à être fabriquée.

Cette opération OP1, avec l'utilisation d'un unique outil pour les trois versions, permet donc ici la réalisation de trois versions différentes d'un véhicule, ce qui permet donc de faire l'économie de deux outils et ce qui engendre donc des gains en termes de préparation du procédé, à savoir machines de presses, gestion des flux de pièces, etc.

Comme représenté sur les figures 5b, 6b et 7b, cette première opération OP1 d'emboutissage permet notamment la formation des parties communes 11 a, 11 b, 11 c, identiques dans les trois versions des planchers 10a, 10b, 10c.

Sur les figures 5c, 6c et 7c, après avoir préalablement effectué une rotation de 180° de la pièce formée à l'étape précédente, l'étape suivante du procédé de fabrication selon l'invention comporte une seconde opération OP2 d'emboutissage, plus particulièrement l'opération OP2 comprend avantageusement une pluralité d'étapes différentes, notamment de détourage (découpe des bords périphériques de la pièce), de poinçonnage (réalisation de trous communs) et/ou de frappe (réalisation de petites formes complémentaires communes aux différentes versions). La seconde opération OP2 d'emboutissage est également identique quelle que soit la version du plancher et la configuration du véhicule, c'est-à-dire réalisée avec un même outil commun aux trois versions, quel que soit le flanc de tôle de départ (figures 5a, 6a, 7a), et quelle que soit la version du plancher destinée à être fabriquée.

Comme représenté sur les figures 5c, 6c et 7c, cette seconde opération OP2 permet notamment la finition des parties communes 11 a, 11 b, 11 c, commencées lors de l'étape précédente. Cette opération OP2 permet là-encore de faire l'économie de deux outils, car cette opération est réalisé par un unique outil, quelle que soit la configuration du véhicule à réaliser.

Sur la figure 5d, dans laquelle le procédé de fabrication est destiné à la réalisation du plancher 10a, l'étape suivante est une troisième opération OP3, plus particulièrement une opération de détourage - relevage (le relevage consistant à redresser les bords d'accostage de la pièce pour les mettre en position finale et les opérations de détourage complémentaires étant adaptées au besoin spécifique de chaque version). Cette opération est réalisée à l'aide d'un outil spécifique pour cette configuration du véhicule et donc pour le plancher 10a. Cette opération permet plus spécifiquement de commencer à former les parties spécifiques 12a du plancher 10a.

Sur la figure 6d, dans laquelle le procédé de fabrication est destiné à la réalisation du plancher 10b, l'étape suivante est également une troisième opération OP3, plus particulièrement une opération de détourage - relevage (le relevage consistant à redresser les bords d'accostage de la pièce pour les mettre en position finale et les opérations de détourage complémentaires étant adaptées au besoin spécifique de chaque version).

Cette opération est réalisée à l'aide d'un outil spécifique pour cette configuration du véhicule et donc pour le plancher 10b. Cette opération permet plus spécifiquement de commencer à former les parties spécifiques 12b du plancher 10b.

Sur les figures 5e et 6e, l'étape suivante du procédé de fabrication selon l'invention comporte une quatrième opération OP4, identique pour les deux premières configurations de véhicule, c'est-à-dire soit pour la réalisation du plancher 10a soit pour la réalisation du plancher 10b. La quatrième opération OP4 comprend, par exemple, des étapes de tombage - frappe - poinçonnage (le tombage étant l'opération inverse du relevage selon le sens de travail de l'outil et la frappe consistant à faire les petites formes complémentaires spécifiques à cette version).

Cette opération permet donc ici la réalisation de deux versions différentes d'un véhicule, à l'aide d'un même outil quelle que soit la version, ce qui permet donc de faire l'économie d'un outil et ce qui engendre donc là encore des gains en termes de préparation du procédé, à savoir machines de presses, gestion des flux de pièces, etc.

Plus particulièrement, cette quatrième opération OP4 permet notamment la finition des parties spécifiques 12a et 12b entamées lors des précédentes étapes respectives (figures 5d et figure 6d) pour la fabrication des planchers 10a ou 10b. Ainsi, cette opération représente donc l'étape finale de fabrication, de sorte que le plancher 10a représenté sur la figure 5e et le plancher 10b représenté sur la figure 6e sont donc les planchers finis tels qu'ils seront assemblés sur la structure de la base roulante du véhicule associé (aux dernières finitions et mises au point prêt).

Sur la figure 7d, l'étape suivante correspond à la dernière étape de réalisation pour le procédé de fabrication selon l'invention destiné à la réalisation du plancher 10c, correspondant à la troisième configuration du véhicule (qui fait donc suite à l'opération représentée sur la figure 7c). Le procédé de fabrication selon l'invention comporte ainsi une cinquième opération OP5 d'emboutissage, par exemple composée de différentes étapes de tombage - relevage - poinçonnage - frappe. Cette opération est réalisée à l'aide d'un outil spécifique pour cette configuration du véhicule et donc pour le plancher 10c. Cette opération permet plus spécifiquement de réaliser les parties spécifiques 12c du plancher 10c.

Ainsi, cette cinquième opération OP5 représente donc l'étape finale de fabrication, de sorte que le plancher 10c représenté sur la figure 7d est donc le plancher 10c fini tel qu'il sera assemblé sur la structure de la base roulante du véhicule associé (aux dernières finitions et mises au point prêts).

Ainsi, la description ci-dessus des trois variantes possibles indépendantes du procédé de fabrication selon l'invention permet d'illustrer le fait que, pour ces trois configurations, une économie d'au moins trois outils à été faite. Plus particulièrement, six outils sont utilisés pour réaliser indépendamment les trois versions, au lieu de neuf outils si les étapes communes n'avaient pas été réalisées.

Quel que soit le mode de réalisation du procédé de fabrication décrit ci-dessus, une même gamme d'emboutissage avec des opérations communes à toutes les versions permet ainsi des gains considérables, d'une part, en termes de gestion des outils et des presses et, d'autre part, en termes de coûts.

Par ailleurs, un tel procédé de réalisation engendre aussi des gains en termes de conception et de modifications pour les dessinateurs de la pièce. De même, une telle conception s'avère très robuste dans le sens où une modification demandée sur la partie commune des planchers sera automatiquement réalisée sur toutes les versions correspondantes des différentes configurations du véhicule.

L'invention n'est pas limitée aux différents modes de réalisation décrits ci-dessus. Notamment, la forme et les dimensions des flancs de tôle nécessaires aux différentes variantes du procédé de fabrication selon l'invention sont non limitatives et dépendent notamment de la taille et du type de plancher à réaliser. De même, la forme et les dimensions des planchers 10a, 10b et 10c sont non limitatives et dépendent notamment des différentes configurations considérées des véhicules automobiles.

Le nombre et le type des opérations du procédé de fabrication selon l'invention peuvent être différents, tant que le procédé comporte au moins une opération utilisant un outil identique pour toutes les versions, de sorte à économiser un maximum d'outil et éviter leur multiplication.

Plus particulièrement, dans des variantes de réalisation non représentées, le procédé de réalisation selon l'invention peut être destiné à la réalisation d'autres versions de planchers. Plus particulièrement, les différentes versions du plancher 10 comme décrit ci-dessus peuvent être déclinées avec des motorisations adaptées aux véhicules du type à gaz pétrole liquéfié, plus communément appelé GPL. Dans ce cas, le logement de la roue de secours, ou bac de roue de secours, peut être également utilisé pour implanter le réservoir de gaz, des adaptations spécifiques étant alors réalisées dans le plancher, par l'ajout de nouvelles opérations spécifiques, avec le même outil commun, comportant éventuellement des parties escamotables, ou selon une mise en opération différente.

A titre d'exemple, après l'opération OP2 d'emboutissage, comme décrit en référence aux figures 5c, 6c et 7c, il est possible de prévoir une opération supplémentaire, par exemple OP2', dans laquelle le même outil, dont une partie (poinçons communs) a préalablement été escamotée, effectue une opération supplémentaire correspondant spécifiquement à la version GPL du plancher, cette opération OP2' étant identique quelle que soit la version considérée du plancher.

Ainsi, le procédé de réalisation selon l'invention peut alors réaliser pas moins de six planchers différents, ce qui correspond à six configurations différentes d'un même véhicule automobile et ce grâce à des mêmes opérations d'emboutissage et des mêmes outils utilisés.

L'invention s'applique plus particulièrement à la fabrication d'un plancher arrière pour un véhicule automobile qui puisse, de par le design du véhicule et le coût de fabrication considéré, avoir un maximum de parties communes selon le type du véhicule à fabriquer.

## Revendications

1. Procédé de fabrication d'un plancher (10a ; 10b ; 10c) arrière d'un véhicule automobile, réalisé à partir d'un flanc de tôle (15a; 15b ; 15c) aux dimensions prédéterminées selon la version du plancher (10a ; 10b ; 10c) arrière considérée, le procédé comportant différentes opérations successives, chaque opération étant associée à au moins un outil déterminé,
procédé **caractérisé en ce que**, étant destiné à la réalisation de plusieurs versions de planchers (10a ; 10b; 10c) arrière correspondant chacune à une configuration différente de véhicule automobile, le procédé comporte au moins une opération (OP1 ; OP2) identique, quelle que soit la version du plancher (10a ; 10b ; 10c) à réaliser, laquelle opération (OP1 ; OP2) étant réalisée à l'aide d'au moins un outil commun pour toutes les versions de planchers (10a ; 10b ; 10c) arrière.

2. Procédé selon la revendication précédente, **caractérisé en ce que**, étant destiné à la réalisation de trois configurations différentes de véhicule automobile, le procédé comporte deux opérations (OP1 ; OP2) communes pour les trois versions de planchers (10a ; 10b ; 10c) arrière.

3. Procédé selon la revendication précédente, **caractérisé en ce qu'**il comporte une opération (OP4) commune pour deux versions de planchers (10a ; 10b) arrière.

4. Procédé selon la revendication 1, **caractérisé en ce que**, étant destiné à la réalisation de trois configurations différentes de véhicule automobile, le procédé comporte au moins les étapes successives suivantes :
- découpage d'un flan de tôle (15a; 15b; 15c) aux dimensions correspondant à la version du plancher (10a ; 10b ; 10c) arrière à réaliser,
- première opération (OP1) commune aux trois configurations, réalisée avec au moins un premier outil, identique quelle que soit la version du plancher (10a ; 10b ; 10c) à réaliser,
- seconde opération (OP2) commune aux trois configurations, réalisée avec au moins un second outil, identique quelle que soit la version du plancher (10a ; 10b ; 10c) à réaliser.

5. Procédé selon la revendication précédente, **caractérisé en ce qu'**i**l** comporte une troisième opération (OP3), uniquement pour une première version d'un plancher (10a) arrière, correspondant à une première configuration de véhicule automobile, réalisée à l'aide d'au moins un troisième outil spécifique à la fabrication de la première version du plancher (10a) arrière.

6. Procédé selon la revendication précédente, **caractérisé en ce qu'**il comporte une troisième opération (OP3), uniquement pour une seconde version d'un plancher (10b) arrière, correspondant à une seconde configuration de véhicule automobile, réalisée à l'aide d'au moins un quatrième outil spécifique à la fabrication de la seconde version du plancher (10b) arrière.

7. Procédé selon la revendication précédente, **caractérisé en ce qu'**il comporte une quatrième opération (OP4), commune à la première et à la seconde configurations de véhicule automobile, réalisée à l'aide d'au moins un cinquième outil, identique pour la fabrication des deux versions de planchers (10a ; 10b) arrière correspondant.

8. Procédé selon la revendication précédente, **caractérisé en ce qu'**il comporte une cinquième opération (OP5), uniquement pour une troisième version d'un plancher (10c) arrière, correspondant à une troisième configuration de véhicule automobile, réalisée à l'aide d'au moins un sixième outil spécifique à la fabrication de la troisième version du plancher (10c) arrière.

9. Plancher arrière (10a ; 10b ; 10c) d'un véhicule automobile réalisé par un procédé de fabrication selon l'une quelconque des revendications précédentes, **caractérisé en ce que** qu'il comporte au moins une portion identique (11 a ; 11b; 11 c) pour toutes les configurations de véhicules automobiles et au moins une portion spécifique (12a ; 12b ; 12c), correspondant à chaque configuration de véhicule automobile.

## Patentansprüche

1. Verfahren zur Herstellung eines hinteren Bodens (10a; 10b; 10c) eines Kraftfahrzeugs, realisiert ausgehend von einem Blechabschnitt (15a; 15b; 15c) mit abhängig von der betreffenden Version des hinteren Bodens (10a; 10b; 10c) festgelegten Abmessungen, wobei das Verfahren mehrere sukzessive Arbeitsgänge umfasst, wobei jeder Arbeitsgang mindestens einem festgelegten Werkzeug zugeordnet ist,
wobei das Verfahren **dadurch gekennzeichnet ist, dass** das Verfahren, das zur Realisierung mehrerer Versionen von hinteren Böden (10a; 10b; 10c), die jeweils einer unterschiedlichen Kraftfahrzeugkonfiguration entsprechen, bestimmt ist, mindestens einen identischen Arbeitsgang (OP1; OP2), unabhängig von der Version des zu realisierenden Bodens (10a; 10b; 10c), umfasst, wobei dieser Arbeitsgang (OP1; OP2) mithilfe mindestens eines gemeinsamen Werkzeugs für alle Versionen von hinteren Böden (10a; 10b; 10c) realisiert wird.

2. Verfahren nach dem vorangegangenen Anspruch, **dadurch gekennzeichnet, dass** das Verfahren, das für die Realisierung von drei unterschiedlichen Kraftfahrzeugkonfigurationen bestimmt ist, zwei gemeinsame Arbeitsgänge (OP1; OP2) für die drei Versionen von hinteren Böden (10a; 10b; 10c) umfasst.

3. Verfahren nach dem vorangegangenen Anspruch, **dadurch gekennzeichnet, dass** es einen gemeinsamen Arbeitsgang (OP4) für zwei Versionen von hinteren Böden (10a; 10b) umfasst.

4. Verfahren nach Anspruch 1, **dadurch gekennzeichnet, dass** das Verfahren, das für die Realisierung von drei unterschiedlichen Kraftfahrzeugkonfigurationen bestimmt ist, mindestens die folgenden sukzessiven Arbeitsgänge umfasst:
- Zuschneiden eines Blechabschnitts (15a; 15b; 15c) auf die Abmessungen, die der Version des zu realisierenden hinteren Bodens (10a; 10b; 10c) entsprechen,
- erster gemeinsamer Arbeitsgang (OP1) für die drei Konfigurationen, realisiert mit mindestens einem ersten Werkzeug, welches bei jeder Version des zu realisierenden Bodens (10a; 10b; 10c) identisch ist,
- zweiter gemeinsamer Arbeitsgang (OP2) für die drei Konfigurationen, realisiert mit mindestens einem zweiten Werkzeug, welches bei jeder Version des zu realisierenden Bodens (10a; 10b; 10c) identisch ist.

5. Verfahren nach dem vorangegangenen Anspruch, **dadurch gekennzeichnet, dass** es einen dritten Arbeitsgang (OP3) nur für eine erste Version eines hinteren Bodens (10a) umfasst, die einer ersten Kraftfahrzeugkonfiguration entspricht, der mithilfe mindestens eines dritten Werkzeugs, welches für die Herstellung der ersten Version des hinteren Bodens (10a) spezifisch ist, realisiert wird.

6. Verfahren nach dem vorangegangenen Anspruch, **dadurch gekennzeichnet, dass** es einen dritten Arbeitsgang (OP3) nur für eine zweite Version eines hinteren Bodens (10b) umfasst, die einer zweiten Kraftfahrzeugkonfiguration entspricht, der mithilfe mindestens eines vierten Werkzeugs, welches für die Herstellung der zweiten Version des hinteren Bodens (10b) spezifisch ist, realisiert wird.

7. Verfahren nach dem vorangegangenen Anspruch, **dadurch gekennzeichnet, dass** es einen gemeinsamen vierten Arbeitsgang (OP4) für die erste und zweite Kraftfahrzeugkonfiguration umfasst, welcher mithilfe mindestens eines fünften Werkzeugs, das für die Herstellung der zwei Versionen von entsprechenden hinteren Böden (10a; 10b) identisch ist, realisiert wird.

8. Verfahren nach dem vorangegangenen Anspruch, **dadurch gekennzeichnet, dass** es einen fünften Arbeitsgang (OP5) nur für eine dritte Version eines hinteren Bodens (10c) umfasst, die einer dritten Kraftfahrzeugkonfiguration entspricht, der mithilfe mindestens eines sechsten Werkzeugs, welches für die Herstellung der dritten Version des hinteren Bodens (10c) spezifisch ist, realisiert wird.

9. Hinterer Boden (10a; 10b; 10c) eines Kraftfahrzeugs, realisiert durch ein Herstellungsverfahren nach einem der vorangegangenen Ansprüche, **dadurch gekennzeichnet, dass** er mindestens einen identischen Teil (11a; 11b; 11c) für alle Kraftfahrzeugkonfigurationen und mindestens einen spezifischen Teil (12a; 12b; 12c), der der jeweiligen Kraftfahrzeugkonfiguration entspricht, umfasst.

## Claims

1. Method of manufacturing a rear floor (10a; 10b; 10c) of a motor vehicle, produced from a sheet metal blank (15a; 15b; 15c) of dimensions predetermined according to the version of the rear floor (10a; 10b; 10c) under consideration, the method comprising various successive operations, each operation being associated with at least one specific tool,
method **characterized in that**, as it is designed for the production of several versions of rear floor (10a; 10b; 10c), each corresponding to a different configuration of motor vehicle, the method comprises at least one identical operation (OP1; OP2), irrespective of the version of the floor (10a; 10b; 10c) to be produced, said operation (OP1; OP2) being implemented by means of at least one tool which is common to all of the versions of rear floor (10a; 10b; 10c).

2. Method according to the preceding claim, **characterized in that**, as it is designed for the production of three different configurations of motor vehicle, the method comprises two operations (OP1; OP2) which are common to the three versions of rear floor (10a; 10b; 10c).

3. Method according to the preceding claim, **characterized in that** it comprises an operation (OP4) which is common to two versions of rear floor (10a; 10b) .

4. Method according to Claim 1, **characterized in that**, as it is designed for the production of three different configurations of motor vehicle, the method comprises at least the following successive steps:
- cutting a sheet metal blank (15a; 15b; 15c) to the dimensions corresponding to the version of the rear floor (10a; 10b; 10c) to be produced,
- a first operation (OP1) which is common to the three configurations, implemented by means of at least one first tool which is identical, irrespective of the version of the floor (10a; 10b; 10c) to be produced,
- a second operation (OP2) which is common to the three configurations, implemented by means of at least one second tool, which is identical irrespective of the version of the floor (10a; 10b; 10c) to be produced.

5. Method according to the preceding claim, **characterized in that** it comprises a third operation (OP3), solely for a first version of a rear floor (10a), corresponding to a first configuration of motor vehicle, implemented by means of at least one third tool which is specific to the manufacture of the first version of the rear floor (10a) .

6. Method according to the preceding claim, **characterized in that** it comprises a third operation (OP3), solely for a second version of a rear floor (10b), corresponding to a second configuration of motor vehicle, implemented by means of at least one fourth tool which is specific to the manufacture of the second version of the rear floor (10b) .

7. Method according to the preceding claim, **characterized in that** it comprises a fourth operation (OP4) , which is common to the first and second configurations of motor vehicle, implemented by means of at least one fifth tool which is identical for the manufacture of the two corresponding versions of rear floor (10a; 10b).

8. Method according to the preceding claim, **characterized in that** it comprises a fifth operation (OP5), solely for a third version of a rear floor (10c), corresponding to a third configuration of motor vehicle, implemented by means of at least one sixth tool which is specific to the manufacture of the third version of the rear floor (10c).

9. Rear floor (10a; 10b; 10c) of a motor vehicle produced by a manufacturing method according to any one of the preceding claims, **characterized in that** it comprises at least one portion (11a; 11b; 11c) which is identical for all of the configurations of motor vehicles and at least one specific portion (12a; 12b; 12c), corresponding to each configuration of motor vehicle.
